# EUROPÄISCHE PATENTANMELDUNG

(11) **EP 2 124 247 A1**
(43) Veröffentlichungstag der Anmeldung: **25.11.2009**
(21) Anmeldenummer: 08009270.3
(22) Anmeldetag: 20.05.2008
(51) Int. Cl.: H01J 61/35, H01J 63/04, H01J 9/22, G02F 1/13357

(54) **Beleuchtungseinheit für ein Display und Verfahren zur Herstellung einer Leuchtkammer für eine Beleuchtungseinheit**

(71) Anmelder: CENTROSOLAR Glas GmbH & Co. KG, 90768 Fürth (DE)
(72) Erfinder: Hofmann, Thomas, 90763 Fürth (DE); Choi, Kyong Hee, 121-781 Seoul (KR)
(74) Vertreter: Walkenhorst, Andreas

(57) **Zusammenfassung**

Es soll eine Beleuchtungseinheit (2) für ein Display, insbesondere in einem Flachbildschirm (1), mit einem in einer Leuchtkammer (10) vorgehaltenen Leuchtstoff angegeben werden, mit der auch bei Einhaltung einer besonders hohen Farbtreue und hohen Farbwiedergabequalität eine besonders hohe Lichtausbeute erreichbar ist. Dabei ist erfindungsgemäß eine Lichtaustrittswand (12) der Leuchtkammer (10) von einem mit einer porösen Antireflex-Oberflächenbeschichtung (22, 24) auf der Basis von SiO₂-Partikeln versehenen Glas (14) gebildet.

## Beschreibung

Die Erfindung bezieht sich auf eine Beleuchtungseinheit für ein Display, insbesondere in einem Flachbildschirm, mit einem in einer Leuchtkammer vorgehaltenen Leuchtstoff wie auf einen Flachbildschirm mit einer Anzahl von derartigen Beleuchtungseinheiten. Sie betrifft weiterhin ein Verfahren zur Herstellung einer Leuchtkammer für eine derartige Beleuchtungseinheit.

Moderne Monitore, Displays oder im allgemeinen Anzeigeeinheiten sind üblicherweise als so genannte Flachbildschirme ausgeführt. Im Gegensatz zu konventionellen Fernsehgeräten oder Monitoren, bei denen zur Bilderzeugung eine Kathodenstrahlröhre vorgesehen ist, und die dementsprechend einen erheblichen Platzbedarf bedingen, sind die Flachbildschirme trotz vergleichsweise großer Anzeigeflächen eher kleinvolumig und in besonders flach gehaltener Bauweise ausgeführt. Zur Bilderzeugung kommen bei derartigen Flachbildschirmen im Gegensatz zur Kathodenstrahlröhre alternative Technologien zum Einsatz, mit denen in der Regel durch Einwirkung von elektrischen Feldern und Entladungen Lichtstrahlen erzeugt werden. Die dazu verwendeten Lichtquellen können beispielsweise auf der Elektroluminesz, der Vakuumfluoreszenz-, der LED- oder der Plasma- Anzeigetechnik beruhen.

Derartige, als Flachbildschirm ausgeführte nicht selbstleuchtende Displays oder Monitore umfassen üblicherweise eine Beleuchtungseinheit, mit der beispielsweise in der Art einer Rückseitenbeleuchtung Lichtstrahlung erzeugt und durch eine Anzahl von vorgelagerten Transmissionsscheiben hindurch geleitet wird, wobei zur Bilderzeugung durch geeignete selektive Ansteuerung der Beleuchtungseinheit oder auch der vorgelagerten Transmissionseinheiten geeignete Manipulationen bei der Lichterzeugung oder-durchleitung vorgenommen werden.

Die Beleuchtungseinheit umfasst dabei in der Regel einen in einer Leuchtkammer vorgehaltenen, üblicherweise auf einem Substrat wie beispielsweise Glas aufgebrachten Leuchtstoff, der durch Anlegen einer elektrischen Spannung zum Leuchten gebracht wird. Der Leuchtstoff wird dabei üblicherweise durch verschiedenartige Vorbehandlungsschritte wie beispielsweise Temperaturprozesse geeignet konditioniert, so dass ein gewünschtes Leuchtverhalten erreichbar ist.

Die Leuchtkammer, in der der Leuchtstoff vorgehalten ist, umgibt dabei üblicherweise den Leuchtstoff in der Art einer Kapselung vollständig, wobei in dieser gehäuseartigen Umfassung des Leuchtstoffs eine Lichtaustrittswand vorgesehen ist. Das durch diese aus der Leuchtkammer austretende Licht aus der Beleuchtungseinheit wird anschließend üblicherweise durch eine Vielzahl verschiedenartiger Zwischenschichten der Display-Einheit oder des Flachbildschirms wie beispielsweise Diffusions- und Polarisationsfolien, Flüssigkristalleinheiten oder dergleichen, hindurch geleitet.

Problematisch bei derartigen Systemen kann sein, dass unter anderem im Hinblick auf Reflexionseffekte und dergleichen beim Durchtritt des in der Beleuchtungseinheit erzeugten Lichts durch die nachfolgenden Elemente eine vergleichsweise starke Lichtschwächung auftreten kann, wobei je nach System beispielsweise lediglich etwa 5 bis 8% der ursprünglichen Lichtausbeute aus der Beleuchtungseinheit bis zum Betrachter durchdringen kann. Darüber hinaus wird in derartigen Systemen ein vergleichsweise großer Anteil der eingesetzten Energie in Wärme umgewandelt, die in unerwünschter Weise zur Aufheizung der beteiligten Systeme mit einhergehender Materialermüdung und -schädigung führen kann. Damit ist ein vergleichsweise hoher Stromverbrauch der Beleuchtungseinheit in Kauf zu nehmen, wobei lediglich ein vergleichsweise geringer Anteil der damit eingesetzten Energie tatsächlich in die gewünschte Lichtausbeute umgesetzt werden kann.

Es besteht daher das Bestreben, die genannten Systeme im Hinblick auf die erreichbare Lichtausbeute bei nur begrenztem Energieeinsatz zu verbessern. Darüber hinaus soll aber auch gerade im Hinblick auf einen möglichen Einsatz in Farbbildschirmen oder -displays in jedem Fall eine besonders hohe Farbwiedergabequalität oder Farbtreue eingehalten werden, insbesondere da in modernen Farbbildschirmen eine Vielzahl von Farbtönen durch additive Überlagerung aus drei Grundbestandteilen erzeugt wird. Um dabei die gewünschte Vielfalt an Farben zu ermöglichen, ist eine vergleichsweise genaue spektrale Farbverteilung bei den einzelnen Bestandteilen wünschenswert.

Der Erfindung liegt daher die Aufgabe zugrunde, eine Beleuchtungseinheit der oben genannten Art anzugeben, mit der auch bei Einhaltung einer besonders hohen Farbtreue und hohen Farbwiedergabequalität eine besonders hohe Lichtausbeute erreichbar ist. Des Weiteren soll ein besonders geeignetes Verfahren zur Herstellung einer derartigen Beleuchtungseinheit angegeben werden.

Bezüglich der Beleuchtungseinheit wird diese Aufgabe erfindungsgemäß gelöst, indem eine Lichtaustrittswand der Leuchtkammer von einem mit einer porösen Antireflex-Oberflächenbeschichtung auf der Basis von SiO₂ Partikeln versehenen Glas gebildet ist.

Die Erfindung geht dabei von der Überlegung aus, dass im Hinblick auf die gewünschte Robustheit und hohe betriebliche Zuverlässigkeit derartiger Systeme gerade auch im Alltagsbetrieb als bewährtes Substratmaterial für die Kapselung des Leuchtstoffs der Leuchtkammer auf Glas zurückgegriffen werden sollte, wobei alle bekannten Glasarten und Glaszusammensetzungen wie beispielsweise Kalk-Natron-Glas, Borosilikatglas, Quarzglas oder dergleichen zum Einsatz kommen können. Um dabei aber eine besonders hohe Lichtausbeute zu gewährleisten und dementsprechend den für ein erforderliches Beleuchtungsergebnis erforderlichen Energieaufwand besonders gering zu halten, sollte ein besonders ungehinderter Durchtritt des erzeugten Lichts durch die Lichtaustrittswand und gegebenenfalls auch durch die nachfolgenden Komponenten gewährleistet sein. Dazu sollten gerade im Bereich der Lichtaustrittswand der Leuchtkammer unerwünschte, lichtaustrittsbehindernde Reflexionseffekte weitgehend vermieden werden. Dies ist erreichbar, in dem gerade im Bereich der Grenzflächen zwischen dem Glassubstrat und der angrenzenden Luft oder dem angrenzenden Gas der die Reflexionseffekte begünstigende Sprung in den Brechzahlen dieser Materialien gezielt minimiert wird. Dazu sollte das die Lichtaustrittswand der Leuchtkammer bildende Glas mit einer geeigneten Antireflex-Oberflächenbeschichtung versehen sein. Im Hinblick auf die gewünschte Robustheit dieser Beschichtung im Hinblick auf Abriebfestigkeit, Temperaturbeständigkeit und dergleichen ist hierfür eine Antireflex-Oberflächenbeschichtung auf der Basis von SiO₂-Partikeln vorgesehen. Derartige poröse Oberflächenbeschichtungen sollten eine mittlerer Brechzahl von etwa 1,23 aufweisen, so dass diese zwischen der Brechzahl von Luft mit 1,0 und der Brechzahl von Glas mit 1,5 liegt. Wie sich zudem überraschenderweise herausgestellt hat, ist durch derartig beschichtete Gläser auch eine besonders hohe Farbwiedergabequalität erreichbar, da durch die beschichteten Gläser insbesondere der Lichtdurchtritt des Blauanteils des Spektrums deutlich geringer beeinflusst wird als bei unbeschichtetem Glas.

Die poröse Antireflexionsbeschichtung kann dabei aus einem bimodalen SiO₂-Partikelsystem bestehen, bei dem im Wesentlichen zwei SiO₂-Partikelfraktionen vorhanden sind, und wie es beispielsweise aus der DE 101 46 687 C1 bekannt ist, deren Offenbarungsgehalt hinsichtlich der Herstellung und der Eigenschaften der Antireflex-Beschichtung ausdrücklich mit einbezogen wird. Alternativ kann die Oberflächenbeschichtung auch aus einem monomodalen SiO₂-Partikelsystem bestehen, wie sie beispielsweise aus der DE 100 51 724 A1 oder der DE 199 18 811 A1 bekannt ist, deren Offenbarungsgehalt ebenfalls ausdrücklich mit einbezogen wird.

Je nach Grenzflächeneffekten und sonstigen Randbedingungen kann die Antireflex-Oberflächenbeschichtung lediglich auf einer Seite des die Lichtaustrittswand der Leuchtkammer bildenden Glases und dabei bevorzugt auf der Außenseite der Leuchtkammer vorgesehen sein. In besonders vorteilhafter Ausgestaltung für besonders niedrig gehaltene Verluste bei der Lichtauskopplung aus der Leuchtkammer ist das die Lichtaustrittswand der Leuchtkammer bildende Glas jedoch beidseitig mit einer Antireflex-Oberflächenbeschichtung der genannten Art versehen.

Eine besonders gezielte Verringerung der unerwünschten Reflexionen an den Grenzflächen Luft/Glas und damit eine entsprechende Erhöhung der Lichttransmission ist erreichbar, in dem die poröse Antireflex-Oberflächenbeschichtung auf der Basis von SiO₂-Partikeln vorteilhafterweise mit einer Brechzahl im Bereich von 1,18 bis 1,44, vorzugsweise von 1,18 bis 1,32, besonders vorzugsweise von etwa 1,23, auf das Glas aufgebracht ist.

Die durch eine Antireflexions-Oberflächenbeschichtung erreichbare Verminderung der Reflexion an den Grenzflächen kann dabei sowohl bei senkrecht auftreffenden oder durchtretenden Lichtstrahlen als auch bei schräg einfallendem Licht genutzt werden, so dass sich insbesondere auch der für den Betrachter oder Beobachter nutzbare Beobachtungswinkel für den Monitor des Display durch die genannten Beschichtungen vergrößern kann. Zudem ist auch eine der Leuchtkammer nachfolgende gezielte Weiterleitung des Lichts zu einzelnen Anzeigeeinheiten oder - elementen aufgrund des höheren nutzbaren Winkels deutlich verbessert.

Die Leuchtkammer kann in ihrer geometrischen oder räumlichen Gestaltung insbesondere an die Erfordernisse des Flachbildschirms oder Monitors geeignet angepasst sein. Insbesondere kann die Beleuchtungseinheit in der Art planaren Ausführung eine Vielzahl im Wesentlichen quaderförmig ausgestalteter Leuchtkammern der genannten Art aufweisen, die in der Art einer Parallelschaltung oder eines Rasters oder Arrays eine vergleichsweise großflächige Beleuchtungseinheit bilden. Alternativ und je nach Bedarf kann in vorteilhafter Ausgestaltung die Leuchtkammer aber auch röhrenförmig ausgebildet sein, wobei die Außenwand dieser Röhre in ihrer Gesamtheit die Lichtaustrittsfläche oder Lichtaustrittswand der Leuchtkammer bilden kann. Gerade bei derartig ausgestalteten Leuchtkammern, also bei röhrenförmigen Beleuchtungskörpern, ist durch die vorgesehene poröse Antireflex-Oberflächenbeschichtung zusätzlich zur verbesserten Licht transmission eine vergleichsweise stärkere Auffächerung des Lichts beim Durchtritt und somit eine besonders gleichmäßige Lichtverteilung innerhalb des Displays oder Monitors insgesamt erreichbar. Damit kann möglicherweise auf die ansonsten erforderlichen Diffusorsysteme, die zur Vergleichmäßigung der Lichtverteilung eingesetzt werden, verzichtet werden.

Als eigentliche Lichtquellen in der Leuchtkammer sind verschiedenartige Systeme denkbar. Beispielsweise können bei planar ausgeführten Glassubstraten Beleuchtungssysteme auf der Basis von LEDs (Light emitting diode), auf der Basis von OLED (organic light emitting diode) oder auch herkömmliche Beleuchtungsquellen vorgesehen sein. In besonders vorteilhafter Ausgestaltung sind in der Leuchtkammer aber Lichtquellen auf der Basis von Kohlenstoff-Nanoröhren (CNT, Carbon nanotubes) vorgesehen.

In besonders vorteilhafter Ausgestaltung ist die Beleuchtungseinheit oder eine Mehrzahl derartiger Beleuchtungseinheiten in einem Flachbildschirm eingesetzt.

Bezüglich des Verfahrens zur Herstellung einer Leuchtkammer für eine Beleuchtungseinheit der genannten Art wird die genannte Aufgabe gelöst, indem die poröse Antireflex-Oberflächenbeschichtung mit einem nasschemischen Sol-Gel-Prozess auf die Lichtaustrittswand aufgebracht wird. Bei einem derartigen Prozess erfolgt die Beschichtung eines Glases mit der porösen Antireflex-Oberflächenbeschichtung auf Basis von SiO₂-Partikeln üblicherweise unter Verwendung so genannter Sole, in denen [SiO₂ₓ (OH)_{Y}]ₙ-Partikel mit Lösungsmitteln und gegebenenfalls mit einem Stabilisator versetzt sind. Auf der Basis derartiger Sole können Beschichtungslösungen bereitgestellt werden, in die das zu beschichtende Glas eingetaucht werden kann, wobei sich das schichtbildende Sol auf der Glasoberfläche niederschlägt.

Aus der DE 199 18 811 A1 ist beispielsweise die Verwendung eines derartigen Sols auf Basis eines Alkohol-Wasser-Gemisches zur Herstellung einer porösen Antireflex-Oberflächenbeschichtung auf Basis von SiO₂-Partikeln bekannt. Ein Sol-Gel-Prozess der genannten Art, der auf einem wässrigen Solsystem als Basis beruht, ist hingegen aus der DE 100 51 724 A1 bekannt. Ein Hybridsol, aus dem das genannte bimodale SiO₂-Partikelsystem hergestellt werden kann, ist hingegen aus der DE 101 46 687 C1 bekannt. Die Offenbarung dieser Druckschriften wird hinsichtlich der Herstellung und Aufbringung der Oberflächenbeschichtung sowie der dazu zu verwendenden Parameter und dergleichen ausdrücklich miteinbezogen.

Die Aufbringung der Beschichtung durch einen nasschemischen Sol-Gel-Prozess kann dabei grundsätzlich unter Rückgriff auf alle nasschemischen Auftragstechniken wie beispielsweise Sprühen oder dergleichen erfolgen. Im Gegensatz zu konventionellen Antireflexsystemen, die aus mehreren, physikalisch durch Kathodenzerstäubung oder dergleichen aufgetragenen Schichten bestehen, können mit einem derartigen nasschemischen Prozess auch gebogene, stark gekrümmte oder röhrenförmige Substrate beschichtet werden, so dass die gewünschte hohe Lichtausbeute auch bei verschiedenartigen Formgebungen der Lichtaustrittswand der Leuchtkammer erreichbar ist. In besonders vorteilhafter Ausgestaltung wird die Oberflächenbeschichtung dabei in einem Tauchprozess auf die Lichtaustrittswand aufgebracht, insbesondere da gerade durch einen derartigen Tauchprozess in einem einzigen Verfahrensschritt das gleichzeitige Beschichten der Außen- und der Innenseite von röhrenförmigen Glassubstraten, also für röhrenförmig ausgebildete Leuchtkammern, möglich ist.

Bei planaren Glassubstraten, die insbesondere für Beleuchtungssysteme auf der Basis von LED, CNT oder OLED herangezogen werden können, ist hingegen üblicherweise lediglich eine auf einer Seite mit dem porösen SiO₂-Antireflexionsschichtsystem versehene Scheibe erforderlich. Diese ist in einem Tauchprozess erhältlich durch vorübergehendes Zusammenfügen zweier Scheiben und gemeinsame Tauchbeschichtung, wobei die zwei Scheiben anschließend wieder getrennt werden. Der Zwischenraum zwischen den beiden Scheiben kann dabei während des Tauchvorgangs mit einem Dichtmittel versehen werden, um ein Eindringen der Beschichtungslösung in dem Zwischenraum zwischen den beiden Scheiben zu verhindern.

Die mit Erfindung erzielten Vorteile bestehen insbesondere darin, dass durch die Ausstattung der Lichtaustrittswand der Leuchtkammer der Beleuchtungseinheit mit einer auf SiO₂-Partikeln basierenden porösen Antireflex-Oberflächenbeschichtung einerseits eine besonders hohe Lichtausbeute ermöglicht ist, wobei andererseits im Hinblick auf die erreichbaren spektralen Transmissionseigenschaften des beschichteten Systems eine besonders hohe Farbwiedergabetreue, insbesondere im Blau-Anteil des Spektrums, erreichbar ist. Durch den zur Herstellung der Beleuchtungseinheit vorgesehenen Tauchbeschichtungsprozess mit einem Sol-Gel-Verfahren ist zudem auf besonders zuverlässige und wirksame eine gleichmäßige Beschichtung auf hohe Stückzahlen der genannten Einheiten ermöglicht.

Ein Ausführungsbeispiel der Erfindung wird anhand einer Zeichnung näher erläutert. Darin zeigen:
- Figur 1:: schematisch einen Flachbildschirm ausschnittsweise im Quer- schnitt,
- Figur 2 - 4:: jeweils ausschnittsweise im Querschnitt die Lichtaustrittswand einer Leuchtkammer,
- Figur 5:: eine röhrenförmig ausgebildete Leuchtkammer,
- Figur 6, Figur 7:: jeweils alternative Ausführungsformen der Leuchtkammer nach Figur 5 im Querschnitt, und
- Figur 8:: schematisch ein Diagramm zur Darstellung des Herstellungs- prozesses einer Leuchtkammer.

Gleiche Teile sind in allen Figuren mit denselben Bezugszeichen versehen.

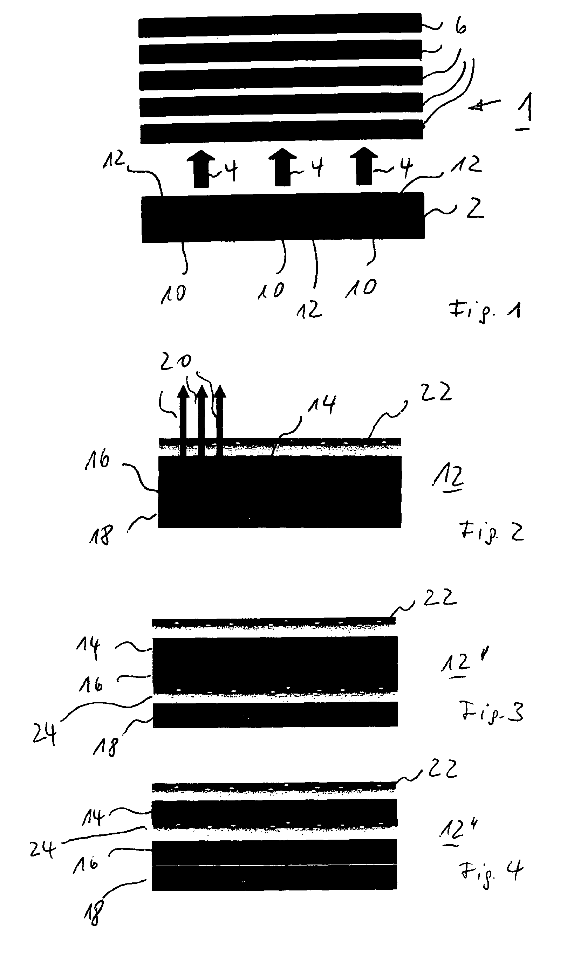

Der in Figur 1 ausschnittsweise schematisch im Querschnitt dargestellte Flachbildschirm 1, der insbesondere zum Einsatz als Monitor oder Display vorgesehen ist, umfasst eine flächig ausgeführte Beleuchtungseinheit 2. Die Beleuchtungseinheit 2, auch als "back light unit, BLU" bezeichnet, ist zur bedarfsweisen und gesteuerten Erzeugung von Licht ausgelegt, das- wie durch die Pfeile 4 angedeutet - in Richtung auf eine Anzahl weiterer aktiver Elemente des Flachbildschirms 1 abgestrahlt wird. Als weitere, der Beleuchtungseinheit 2 zur Betrachterseite hin vor geschaltete aktive Elemente oder Zwischenelemente 6 können dabei verschiedene Elemente zur selektiven, im Zweifelsfall ortsaufgelösten Ansteuerung oder Beeinflussung der Lichttransmission geeignete Elemente wie Gläser, Flüssigkristalle, Polarisatoren, Diffusionsfolien und dergleichen vorgesehen sein.

Die Beleuchtungseinheit 2 des Monitors oder Flachbildschirms 1 umfasst eine Anzahl von im Ausführungsbeispiel nach Figur 1 flächig nebeneinander angeordneten Leuchtkammern 10, in denen jeweils zur bedarfsweisen Lichterzeugung ein geeigneter Leuchtstoff vorgehalten ist. Die Leuchtkammer 10 umgibt dabei den Leuchtstoff jeweils in der Art eine Kapselung. Zur bedarfsweisen Lichtauskopplung und Weiterleitung an die nachfolgenden Zwischenelemente 6 umfasst jede Leuchtkammer 10 eine transparente und für den Lichtdurchtritt geeignete Lichtsaustrittswand 12.

Die Leuchtkammern 10 der Beleuchtungseinheit 2 sind jeweils für eine besonders wirkungsvolle und verlustarme Lichtauskopplung und -weiterleitung und somit für die Wahrung einer hohen Farbwiedergabequalität auch im blauen Spektralbereich ausgelegt. Dazu ist die Lichtaustrittswand 12 der jeweiligen Leuchtkammer 10 von einem geeignet gewählten Glas, insbesondere einem Kalk-Natron-Glas, einem Borosilikatglas oder einem Quarzglas-, gebildet, das ein- oder beidseitig, also innen - und außenseitig, mit einer porösen Antireflex-Oberflächenbeschichtung auf der Basis von SiO₂-Partikeln versehen ist. Verschiedene Ausgestaltungen hierzu sind in den Ausführungsbeispielen nach den Figuren 2 bis 4 dargestellt.

Die in Figur 2 ausschnittsweise in Querschnitt dargestellte Lichtaustrittswand 12 der Leuchtkammer 10 ist im Wesentlichen durch einen als Träger oder Substrat vorgesehenen Glaskörper 14 gebildet, der im Falle einer flächigen Ausgestaltung des Trägers 14 mit einer als Elektrode vorgesehenen leitfähigen Beschichtung 16 beispielsweise aus ITO versehen ist. Zum Innenraum der Leuchtkammer 10 hin ist auf diese Beschichtung 16 eine Schicht 18 aus einem geeignet gewählten Leuchtstoff aufgetragen. Im Betriebsfall wird dieser Leuchtstoff durch die gezielte Einstrahlung elektrischer Felder oder dergleichen zum Leuchten gebracht, wobei das dabei erzeugte Licht wie durch die Pfeile 20 angedeutet durch das Glas 14 ausgekoppelt wird. Um dabei die Lichtauskopplung besonders zu begünstigen, ist an der Außenseite der Lichtaustrittswand 12 auf dem Glas 14 eine poröse Antireflex-Oberflächenbeschichtung 22 angebracht. Diese kann dabei von einem monomodalen SiO₂-Partikelsystem, wie es beispielsweise erhältlich ist durch eine Tauchbeschichtung des Glases 14 in einem Sol-Gel-Prozess gemäß der DE 199 18 811 A1 oder der DE 100 51 724 A1, oder aus einem bimodalen SiO₂ Partikelsystem, wie es beispielsweise erhältlich ist durch Tauchbeschichtung nach dem Sol-Gel-Prozess gemäß der DE 101 46 687 C1, gebildet sein. Im Ausführungsbeispiel nach Figur 2 ist das die Lichtaustrittswand 12 bildende Glas 14 somit lediglich einseitig, nämlich auf der Außenseite der Leuchtkammer 10, beschichtet.

Alternativ kann aber auch, wie dies in den Ausführungsbeispielen nach Figur 3, Figur 4 dargestellt ist, eine zweiseitige Beschichtung, also eine innen- und außenseitige, des Glases 14 mit einer porösen Antireflex-Oberflächenbeschichtung 22 vorgesehen sein. Im Ausführungsbeispiel nach Figur 3 ist dabei zusätzlich zu der außenseitig angebrachten Antireflex-Oberflächenbeschichtung 22 innenseitig eine weitere Antireflex-Oberflächenbeschichtung 24 vorgesehen, die zwischen der ITO-Schicht und dem Leuchtstoff 18 aufgetragen ist. Im Ausführungsbeispiel nach Figur 4 ist hingegen die weitere Antireflex-Oberflächenbeschichtung 24 innenseitig ebenfalls unmittelbar am Glas 14 angebracht.

Die poröse Antireflex-Oberflächenbeschichtung 22, 24 ist dabei für eine Brechzahl von etwa 1,18 bis 1,44, vorzugsweise von etwa 1,18 bis etwa 1,32, besonders vorzugsweise von etwa 1,23, ausgelegt. Durch die Einstellung einer derartigen Brechzahl, die weitgehend zwischen der Brechzahl von Luft (1,0) und der Brechzahl von Glas (etwa 1,5) liegt, ist sichergestellt, dass das hindurch tretende Licht aufgrund der damit erreichbaren Verringerung der Brechzahlsprünge zwischen den einzelnen Schichten nur eine lediglich verringerte Reflexion erfährt.

Die Leuchtkammer 10 kann hinsichtlich ihrer räumlichen Gestalt und Konturierung an die spezifischen Erfordernisse des jeweiligen Displays oder Flachbildschirms 1 angepasst sein. Insbesondere kann dabei eine grundsätzlich planare Ausgestaltung vorgesehen sein, bei der das verwendete Trägerglas oder Substrat flächig ausgebildet ist und eine Vielzahl flächig nebeneinander in der Art eines Arrays angeordnete Leuchtkammern 10 bildet. Bei einer derartigen, grundsätzlich planaren Ausgestaltung können die in den Leuchtkammern 10 vorgesehenen Beleuchtungssysteme auf verschiedenen gängigen Technologien, beispielsweise auf der Basis von LED (light emitting diode), auf der Basis von OLED (organic light emitting diode), auf der Basis von TFT oder dergleichen beruhen.

In besonders vorteilhafter Ausgestaltung ist in einem derartigen System als Beleuchtungssystem aber ein auf der Basis von Kohlenstoff-Nanoröhren (CNT, carbon nanotubes) beruhendes System vorgesehen. Bei einem derartigen System werden die Kohlenstoff-Nanoröhren geeignet auf einem Trägersubstrat aufgebracht und anschließend in ihrer Längsrichtung im Wesentlichen senkrecht zur Substratoberfläche aufgerichtet. Durch geeignetes Anlegen elektrischer Felder zwischen der als Substrate vorgesehenen Bodenplatte und einer weiteren, entsprechend zugeordneten Deckenplatte können in diesen Nanoröhren anschließend Entladungen erzeugt werden, bei denen die dabei in der Art einer Feldemission emittierten Elektronen einen benachbarten Leuchtstoff geeignet zum Leuchten und somit zur Lichtemission bringen. Gerade in einem derartigen System ist die vorgesehene Lichtauskopplung über die mit einer porösen Antireflex-Oberflächenbeschichtung versehenen Glasscheiben im Hinblick auf die erreichbaren Wirkungs- oder Ausbeutegrade besonders vorteilhaft.

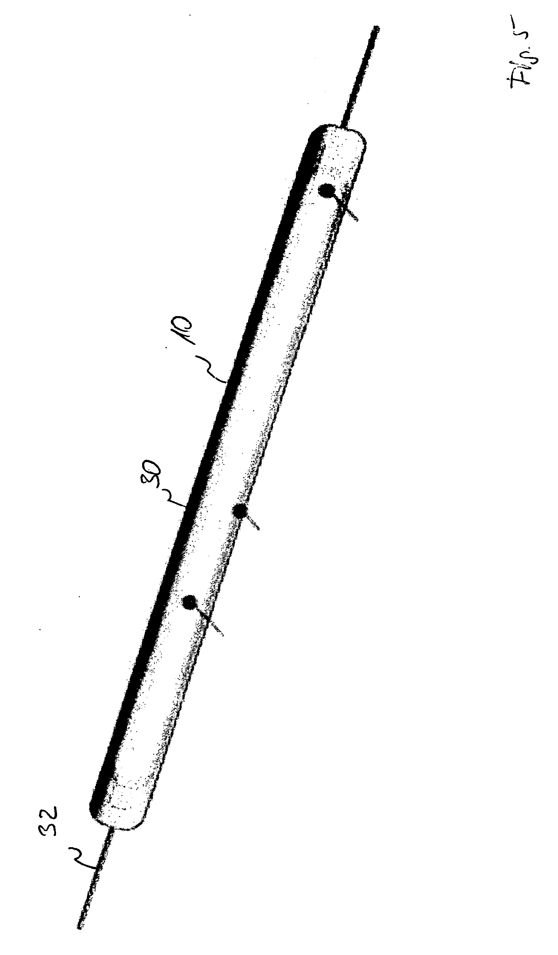

Alternativ kann die Leuchtkammer 10 aber auch röhrenförmig ausgestaltet sein, wie dies im Ausführungsbeispiel nach Figur 5 dargestellt ist. Ein derartiger, als Leuchtkammer 10 vorgesehener Leuchtkörper kann insbesondere als so genannte Kaltkathoden-Fluoreszenzleuchte (cold cathod fluorescence light, CCFL) ausgestaltet sein, bei der innerhalb einer die Leuchtkammer 10 bildenden Glasröhre 30 eine Elektrode 32, beispielsweise aus Nickel (Ni) angeordnet ist. Die Glasröhre 30, die evakuiert oder mit einem geeignet gewählten Füllgas wie beispielsweise Neon (Ne), Argon (Ar) oder Quecksilber (Hg) gefüllt ist, ist an ihrer Innenseite mit dem Leuchtstoff z. B. aus Phosphor (P), beschichtet, der über die Elektrode 32 und die entsprechenden Entladungsvorgänge im Füllgas zum Leuchten angeregt wird. Bei einer derartigen, röhrenförmigen Ausgestaltung bildet die Glasröhre 30 in ihrer Gesamtheit die Lichtaustrittswand 12 der Leuchtkammer 10. Eine ITO-Beschichtung ist in diesem Fall nicht erforderlich.

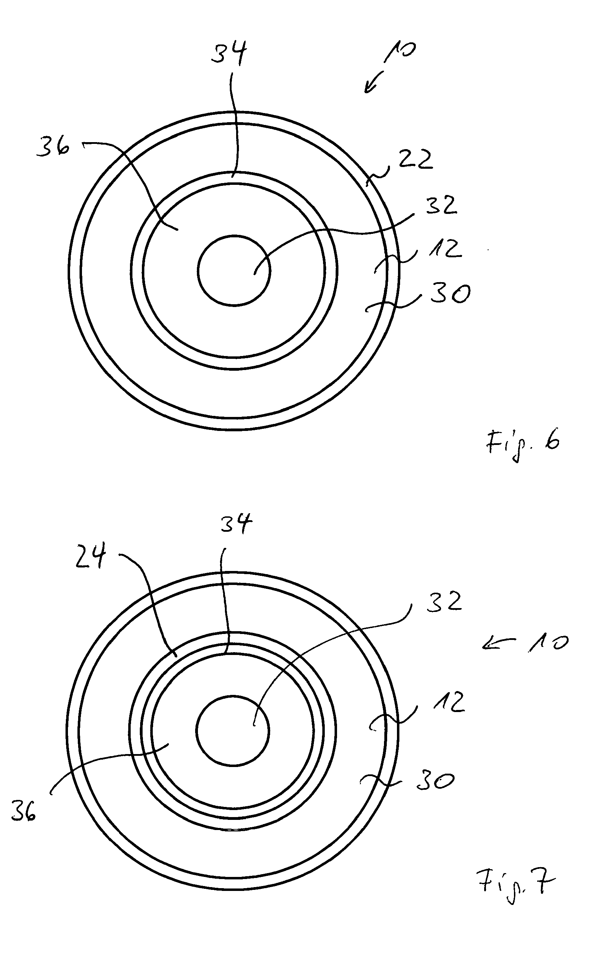

Um auch bei einer derartigen Ausgestaltung eine besonders hohe Lichtausbeute zu gewährleisten, ist, wie dies in den Querschnittsdarstellungen in den Figuren 6, 7 dargestellt ist, die Lichtaustrittswand 12 bildende Glasrohr 30 geeignet mit der porösen Antireflex-Oberflächenbeschichtung 22 versehen. Im Ausführungsbeispiel gemäß Figur 6 ist dabei die poröse Antireflex-Oberflächenbeschichtung 22 an der Außenseite der Glasröhre 30 angebracht. Innenseitig ist die Glasröhre 30 hingegen mit der Schicht 34 aus Leuchtstoff beschichtet, die ihrerseits den mit den genannten Füllgasen befüllten Gasraum 36 und die zentral darin angeordnete Elektrode 32 umschließt. Im Ausführungsbeispiel nach Figur 7 ist ergänzend hierzu noch eine weitere, innenseitig angeordnete poröse Antireflex-Oberflächenbeschichtung 24 für die Glasröhre 30 vorgesehen.

Zur Herstellung der Leuchtkammer 10, also insbesondere der mit der porösen Antireflex-Oberflächenbeschichtung 22, 24 versehenen Lichtaustrittswand 12, ist die Verwendung eines nasschemischen Sol-Gel-Tauchprozesses vorgesehen. Dabei wird ein Sol verwendet, in dem Siliziumhydroxid-Partikel mit Lösungsmitteln und gegebenenfalls mit einem Stabilisator versetzt sind. Auf der Basis derartiger Sole werden Beschichtungslösungen bereit gestellt, in die das zu beschichtende Glas eingetaucht wird, wobei sich das schichtbildende Sol auf der Glasoberfläche niederschlägt. Ein derartiger Tauchprozess auf der Basis eines nasschemischen Sol-Gel-Verfahrens ist insbesondere vorteilhaft bei der Herstellung einer röhrenförmig ausgebildeten Leuchtkammer 10 gemäß den genannten Ausführungsbeispielen, da einerseits durch einen derartigen nasschemischen Tauchprozess auch gebogene, stark gekrümmte oder röhrenförmige Substrate überhaupt ausreichend gleichförmig und stabil beschichtet werden können, wobei andererseits durch den Tauchprozess in einem einzigen Verfahrensschritt das gleichzeitige Beschichten der Außen- und der Innenseite des röhrenförmigen Glassubstrats ermöglicht ist.

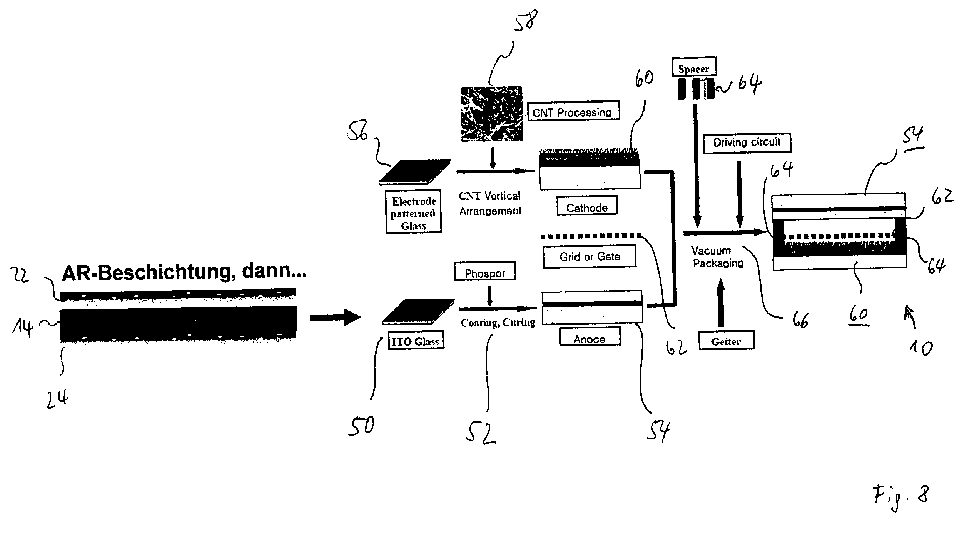

Die Verfahrensschritte des möglichen Herstellungsprozesses für eine Leuchtkammer 10 in planarer Bauweise sind schematisch in Figur 8 dargestellt. Dabei wird das mit der porösen Antireflex-Oberflächenbeschichtung 22, 24 versehene Glas 14 in einem ersten Schritt 50 mit einer geeigneten ITO-Beschichtung versehen und anschließend in einem weiteren Schritt 52 geeignet mit Leuchtstoff, beispielsweise Phosphor, beschichtet. Im Ergebnis ist dabei beispielsweise ein Element 54 erhältlich, das als Anode für die Leuchtkammer 10 dienen kann. Andererseits wird ein geeignet Elektronenstrahl-vorstrukturiertes Glas 56 in einem Beschichtungsschritt 58 mit einer Beschichtung aus Kohlenstoff-Nanoröhren versehen, die anschließend durch geeignete Vorbehandlung mit ihrer Längsrichtung im Wesentlichen senkrecht zur Glasoberfläche aufgestellt werden. Das so erhaltene Zwischenprodukt 60 kann anschließend als Kathode zur Bildung der Leuchtkammer 10 verwendet werden. Das Zwischenprodukt 54 und das Zwischenprodukt 60 werden anschließend unter Einschluss eines Gitters 62 und unter Verwendung geeigneter Abstandshalter 64 in einem weiteren Montageschritt 66 zur Leuchtkammer 10 zusammengefügt.

### Bezugszeichenliste

- 1: Flachbildschirm
- 2: Beleuchtungseinheit
- 4: Pfeile
- 6: Zwischenelemente
- 10: Leuchtkammer
- 12: Lichtaustrittswand
- 14: Glas
- 16: Beschichtung aus ITO
- 18: Leuchtstoff
- 20: Pfeile
- 22: Antireflex-Oberflächenbeschichtung
- 24: Antireflex-Oberflächenbeschichtung
- 30: Glasröhre
- 32: Elektrode
- 34: Schicht aus Leuchtstoff
- 50: ersten Schritt
- 52: weitere Schritt
- 54: Element
- 56: Elektronenstrahl-vorstrukturiertes Glas
- 58: Beschichtungsschritt
- 60: Zwischenprodukt
- 62: Gitter
- 64: Abstandshaltung
- 66: Montageschritt

## Patentansprüche

1. Beleuchtungseinheit (2) für ein Display, insbesondere in einem Flachbildschirm (1), mit einem in einer Leuchtkammer (10) vorgehaltenen Leuchtstoff, wobei eine Lichtaustrittswand (12) der Leuchtkammer (10) von einem mit einer porösen Antireflex-Oberflächenbeschichtung (22, 24) auf der Basis von SiO₂-Partikeln versehenen Glas (14) gebildet ist.

2. Beleuchtungseinheit (2) nach Anspruch 1, bei der das die Lichtaustrittswand (12) bildende Glas beidseitig mit einer Antireflex-Oberflächenbeschichtung (22, 24) versehen ist.

3. Beleuchtungseinheit (2) nach Anspruch 1 oder 2, bei der die Antireflex-Oberflächenbeschichtung (22, 24) eine Brechzahl von 1,18 bis 1,44, vorzugsweise von 1,18 bis 1,32, besonders vorzugsweise von etwa 1,23, aufweist.

4. Beleuchtungseinheit (2) nach einem der Ansprüche 1 bis 3, deren Leuchtkammer (10) röhrenförmig ausgebildet ist.

5. Beleuchtungseinheit (2) nach einem der Ansprüche 1 bis 4, in deren Leuchtkammer (10) Lichtquellen auf der Basis von Kohlenstoff-Nanoröhren vorgehalten sind.

6. Flachbildschirm (1) mit einer Anzahl von Beleuchtungseinheiten (2) nach einem der Ansprüche 1 bis 5.

7. Verfahren zur Herstellung einer Leuchtkammer (10) für eine Beleuchtungseinheit (2) nach einem der Ansprüche 1 bis 6, bei dem die poröse Antireflex-Oberflächenbeschichtung (22, 24) mit einem nasschemischen Sol-Gel-Prozess auf die Lichtaustrittswand (12) aufgebracht wird.

8. Verfahren nach Anspruch 7, bei dem die Oberflächenbeschichtung (22, 24) in einem Tauchprozess auf die Lichtaustrittswand (12) aufgebracht wird.
